# EUROPÄISCHE PATENTSCHRIFT

(11) **EP 1 749 373 B1**
(45) Veröffentlichungstag und Bekanntmachung des Hinweises auf die Patenterteilung: **01.09.2010**
(21) Anmeldenummer: 05757049.1
(22) Anmeldetag: 26.05.2005
(51) Int. Cl.: H04L 12/28, H04L 12/56, H04W 72/12

(54) **BETRIEB EINER DATENVERBINDUNG MIT MINIMIERTER VERZÖGERUNG**
OPERATION OF A DATA CONNECTION WITH MINIMISED DELAY
OPERATION D'UNE CONNECTION DE DONNEES AVEC DELAI MINIMISE

(30) Priorität: 27.05.2004 DE 102004026487
(43) Veröffentlichungstag der Anmeldung: 07.02.2007
(73) Patentinhaber: Aastra DeTeWe GmbH, 10997 Berlin (DE); IHP GmbH Innovations for High Performance Microelectronics/Institut für Innovative Mikroelektronik, 15236 Frankfurt (Oder) (DE)
(72) Erfinder: BECKER, Thomas, 13467 Berlin (DE); KRAUSE, Frank-Michael, 12437 Berlin (DE); METHFESSEL, Michael, 15230 Frankfurt (Oder) (DE); TITTELBACH-HELMRICH, Klaus, 15234 Frankfurt (Oder) (DE)
(74) Vertreter: Ninnemann, Detlef
(86) Internationale Anmeldenummer: PCT/DE2005/000975
(87) Internationale Veröffentlichungsnummer: WO 2005/117351

(56) Entgegenhaltungen:
- US-A1- 2003 148 767
- US-B1- 6 332 077
- GRIECO L A ET AL: "A control theoretic approach for supporting quality of service in IEEE 802.11e WLANs with HCF" 42ND. IEEE CONFERENCE ON DECISION AND CONTROL.(CDC). MAUI, HI, DEC. 9, Bd. VOL. 1 OF 6. CONF. 42, 9. Dezember 2003 (2003-12-09), Seiten 1586-1591, XP010685880 ISBN: 0-7803-7924-1
- SHIRDOKAR R ET AL: "A QoS-based indoor wireless data network design for VoIP applications" VTC FALL 2001. IEEE 54TH. VEHICULAR TECHNOLOGY CONFERENCE. PROCEEDINGS. ATLANTIC CITY, NJ, OCT. 7 - 11, 2001, IEEE VEHICULAR TECHNOLGY CONFERENCE, NEW YORK, NY : IEEE, US, Bd. VOL. 1 OF 4. CONF. 54, 7. Oktober 2001 (2001-10-07), Seiten 2594-2598, XP010562442 ISBN: 0-7803-7005-8

## Beschreibung

Die Erfindung bezieht sich auf ein Verfahren, eine Basisstation und eine Mobilstation mit den Merkmalen gemäß den Oberbegriffen der Ansprüche 1, 30 und 33.

Ein derartiges Verfahren ist beispielsweise von WLAN (Wireless Local Area Network)-Systemen bekannt. Bei diesem vorbekannten Verfahren wird eine Datenverbindung zwischen einer Basisstation und einer oder mehreren Mobilstationen betrieben, indem innerhalb von Übertragungsphasen Datenpakete zwischen der Basisstation und den Mobilstationen übertragen werden. Die Übertragungsphasen können bei WLAN-Systemen durch "contention-free"-Perioden gebildet sein. Der Beginn jeder Übertragungsphase wird jeweils durch die Abgabe eines StartSignals, das anschaulich auch als Beacon-Signal bezeichnet werden kann, angezeigt; nach Abgabe des Beacon-Signals wird die Luftschnittstelle zwischen der Basisstation und den Mobilstationen für die jeweilige Übertragungsphase von der Basisstation belegt bzw. verwaltet. Innerhalb jeder Übertragungsphase werden die Mobilstationen von der Basisstation angesprochen und zum Austausch von Datenpaketen aufgerufen. Nach Abschluss einer jeden Übertragungsphase schließt sich jeweils eine Übertragungspause an, in der keine von der Basisstation kontrollierte bzw. verwaltete Übertragung von Datenpaketen zwischen der Basisstation und den Mobilstationen stattfindet. Da in diesen Übertragungspausen die Luftschnittstelle von der Basisstation nicht verwaltet wird, können in diesen Übertragungspausen beliebige andere Geräte auf die Luftschnittstelle zugreifen. Die Übertragungspausen werden demgemäß bei WLAN-Verbindungen auch als "contention"(Wettbewerb)-Perioden bezeichnet. Bei WLAN-Netzen erfolgt das Senden der Beacon-Signale durch die Basisstation in regelmäßigen Zeitabständen, beispielsweise alle 10,24 ms, so dass alle 10,24 ms eine neue Übertragungsphase gebildet wird.

Die Datenpakete werden bei dem vorbekannten WLAN-Verfahren mit Daten eines Datenstroms, insbesondere eines Sprach-und/oder Videodatenstroms, gebildet; mit den empfangenen Datenpaketen wird anschließend ein Empfangsdatenstrom erzeugt. Der Zugriff auf das Übertragungsmedium (Airinterface bzw. Luftschnittstelle) erfolgt bei dem vorbekannten WLAN-Verfahren normalerweise nach dem CSMA/CA-Verfahren (carrier sense multiple access with collision avoidance), wobei die einzelnen Mobilstationen konkurrierend auf die Luftschnittstelle zugreifen. Damit ist nicht vorhersagbar, wann ein zur Übertragung anstehendes Datenpaket wirklich übertragen werden kann.

Der Standard IEEE802.11e (QoS-Erweiterungen für WLAN) gibt nun die Möglichkeit, den Zugriff auf das Medium durch die Basisstation (Access Point) zu koordinieren. IEEE802.11e definiert hierzu eine Funktionalität "Hybrid Coordination Function (HCF)", welche ihrerseits eine Koordinationsfunktion für den Zugriff der Mobilstationen auf das Übertragungsmedium namens "HCF Controlled Channel Access (HCCA)" definiert. Vereinfacht dargestellt werden dabei die einzelnen Mobilstationen, die eine solche Übertragungsart angemeldet haben, direkt nach der Beacon-Aussendung nacheinander durch die Basisstation (Access Point) abgefragt und damit deren Datenpakete abgeholt. Die zeitlichen Bedingungen für diesen Abfragemechanismus sind so definiert, dass eine Mobilstation von sich aus nicht die Kontrolle über das Übertragungsmedium gewinnen kann.

Die US-amerikanische Offenlegungsschrift US 2004/0066783 A1 offenbart ein Verfahren zur Organisation eines Netzwerkes mit einer zentralen Struktur. Um Verbindungen mit Geräten, die mit unterschiedlichen Übertragungsverfahren arbeiten und unterschiedliche Übertragungsqualitäten benötigen, zu handhaben, wird bei jedem Verbindungsaufbau eine Kennung für den jeweiligen Verbindungstyp mitgeliefert. Jedem Verbindungstyp ist eine Verbindungsspezifikation zugeordnet.

Im Vergleich zu synchronen Übertragungsverfahren (vgl. z.B. das bekannte DECT (Digital European Cordless Telephone)-Verfahren), bei denen die Übertragung eines Sprachdatenpaketes immer zum exakt gleichen Zeitpunkt relativ zum Rahmenbeginn der Übertragung stattfindet, ist der genaue Zeitpunkt der Übertragung innerhalb der Übertragungsphase bei dem eingangs beschriebenen und dieser Erfindung zugrunde liegenden Verfahren nicht festgelegt. Änderungen der Übertragungszeitpunkte können sich z.B. durch das Hinzukommen weiterer Mobilstationen bzw. den Wegfall von Mobilstationen und ggf. durch Wiederholungen von nicht erfolgreichen Übertragungsversuchen ergeben; die Änderungen der Übertragungszeitpunkte können die Übermittelungsgeschwindigkeit bei der Übermittlung eines Datenstroms - wie erfinderseitig festgestellt wurde - zum Teil erheblich beeinflussen.

Aus der Veröffentlichung L.A. Grieco et al., "A Control Theoretic Approach for supporting Quality of Service in IEEE 802.11e WLANs with HCF", Proceeding s of the 42nd IEEE Conference on Decision and Control, Dec. 2003 ist ein Verfahren zur Bandbreitenzuordnung in IEEE802.11e WLAN-Netzwerken bekannt, das eine so genannte "Hybrid Coordination Function" (HCF) und einen "Hybrid Coordinator" (HC) zur Zugangsverwaltung verwendet. Insbesondere wird hier untersucht, wie Übertragungsgelegenheiten innerhalb einer "contention-free"-Periode unter Berücksichtigung der Zeitanforderungen von Verkehrskategorien, beispielsweise für Audio- und Video-Anwendungen, richtig verteilt werden müssen. Aus der genannten Veröffentlichung geht dabei hervor, wie eine Signalanhäufung in einer Mobilstation für eine Reihe von Verkehrskategorien in Anwesenheit von Störungen verarbeitet werden kann, indem die Bandbreite des WLAN-Netzwerkes so allokiert wird, dass die Signalanhäufung jeder Verkehrskategorie innerhalb einer Contention-Free-Periode abgearbeitet wird.

Der Erfindung liegt daher die Aufgabe zugrunde, ein Verfahren der eingangs angegebenen Art derart weiterzuentwickeln, dass die auftretende Verzögerung bei der Übermittelung eines Datenstroms möglichst minimal wird.

Diese Aufgabe wird erfindungsgemäß durch ein Verfahren mit den Merkmalen gemäß Patentanspruch 1 gelöst. Die Erfindung betrifft auch eine Basisstation gemäß Patentanspruch 30 und eine Mobilstation gemäß Patentanspruch 33. Vorteilhafte Ausgestaltungen des erfindungsgemäßen Verfahrens sind in Unteransprüchen angegeben.

Danach ist erfindungsgemäß vorgesehen, dass der Beginn und das Ende jeder Datenpaketbildung jeweils durch die Beacon-Signale getriggert wird.

Ein wesentlicher Vorteil des erfindungsgemäßen Verfahrens besteht darin, dass die Datenströme mit minimaler Verzögerung übertragen werden, weil der Datenstrom in Pakete paketiert wird, deren Paketlänge stets beispielsweise dem zeitlichen Abstand zweier unmittelbar aufeinanderfolgender Beacon-Signale oder ggf. alternativ dem zeitlichen Abstand zweier durch ein oder mehrere weitere Beacon-Signale getrennte Beacon-Signale entspricht. Die Datenpaketbildung ist somit unabhängig von dem Übertragungszeitpunkt der Datenpakete innerhalb der jeweiligen Übertragungsphase. Empfängerseitig ist somit ein unmittelbares Zusammensetzen der Datenpakete möglich, ohne dass deren Übersendungszeitraum berücksichtigt werden müsste. Fehler und damit einhergehend Verzögerungen beim Zusammensetzen der empfangenen Datenpakete, die bei einer zeitlich "wechselnden" bzw. unbestimmten Datenpaketbildung auftreten können, werden somit vermieden.

Bevorzugt wird das Verfahren bei realzeitkritischen Datenströmen, insbesondere beispielsweise bei Audio- oder Video-Datenströmen durchgeführt.

Vorzugsweise schließt sich an jede Übertragungsphase jeweils eine Übertragungspause an, in der keine Datenpaketübermittlung zur Nutzdatenübertragung stattfindet.

Vorzugsweise werden die Datenpakete zwischen der Basisstation und der Mobilstation jeweils in derjenigen Übertragungsphase übertragen, deren Beacon-Signal auch das Ende der jeweiligen Datenpaketbildung triggert. Bei dieser Vorgehensweise werden die Sprachdatenpakete mit anderen Worten also so gebildet, dass immer zu Beginn der Beacon-Aussendung die jeweils jüngsten Daten des Datenstromes auf der Senderseite (Basisstation oder Mobilstation) zu einem Datenpaket zusammengefasst und anschließend gesendet werden.

Bevorzugt werden die empfangenen Datenpakete jeweils bis zum Ende einer vorgegebenen Speicherzeitspanne nach Auftreten des die jeweilige Übertragungsphase auslösenden Beacon-Signals zwischengespeichert, bevor mit den empfangenen Datenpaketen der Empfangsdatenstrom gebildet wird. Damit wird das Auftreten eines zeitlichen Jitter beim Bilden des Empfangsdatenstroms reduziert. Die vorgegebene Speicherzeitspanne hängt vorzugsweise von der Zeitdauer zwischen zwei aufeinanderfolgenden Beacon-Signalen ab. Beispielsweise beträgt die vorgegebene Speicherzeitspanne die Hälfte der Zeitdauer zwischen zwei aufeinanderfolgenden Beacon-Signalen. Im letztgenannten Fall sollte die Länge der Übertragungsphasen vorzugsweise stets kleiner als - oder maximal so groß wie - die Hälfte der Zeitdauer zwischen zwei aufeinanderfolgenden Beacon-Signalen sein, um eine ungestörte Empfangsdatenstrombildung sicherzustellen.

Alternativ können die empfangenen Datenpakete bis zum Ende der jeweiligen Übertragungsphase (U) zwischengespeichert werden, bevor mit den empfangenen Datenpaketen der Empfangsdatenstrom gebildet wird.

Bevorzugt werden die empfangenen Datenpakete - also empfängerseitig - bis zum Ende der jeweiligen Übertragungsphase zwischengespeichert, bevor mit dem jeweils empfangenen Datenpaket der Empfangsdatenstrom gebildet bzw. "fortgesetzt" wird. Durch diese Vorgehensweise wird sichergestellt, dass stets alle für eine Bildung des Empfangsdatenstroms benötigten Daten eines Datenpakets übertragen sind: Ein Fehlen von Daten eines Datenpakets und damit eine fehlerhafte Empfangsdatenstrombildung werden somit vermieden.

Besonders bevorzugt beträgt die zeitliche Länge der Übertragungsphasen jeweils maximal die Hälfte des zeitlichen Abstandes zwischen zwei aufeinanderfolgenden Beacon-Signalen. Damit ist die maximale Verzögerung, die bei der Bildung des Empfangsdatenstroms auftreten kann, begrenzt.

Im Rahmen einer vorteilhaften Ausgestaltung des erfindungsgemäßen Verfahrens wird angestrebt, dass die Mobilstationen nahtlose ("seamless") Hand-Over-Vorgänge zu anderen Basisstationen durchführen können. Unter einem Hand-Over-Vorgang wird dabei verstanden, dass eine Mobilstation ihre Basisstation wechselt, also von der ursprünglichen Basisstation zu einer anderen Basisstation umschaltet, beispielsweise, weil sich die Übertragungsqualität (z. B. Signalstärke, Signal-Rausch-Verhältnis, Bitfehlerrate, usw.) im Hinblick auf die ursprüngliche Basisstation verschlechtert hat. Die Übertragungsqualität soll während der Hand-Over-Vorgänge nicht, zumindest nicht wesentlich, beeinträchtigt werden, so dass der Hand-Over-Vorgang für die Nutzer der Verbindung - beispielsweise im Falle einer Telefonverbindung für die Telefongesprächspartner - möglichst unmerklich ist. Dies wird im Rahmen der vorteilhaften Ausgestaltung des Verfahrens dadurch erreicht, dass jede Mobilstation nach erfolgter Datenpaketübertragung jeweils für zumindest eine nachfolgende Übertragungsphase von der Datenpaketübertragung ausgelassen wird; sobald die Mobilstationen einen Hand-Over-Vorgang vorbereiten wollen, schalten sie außerhalb der zur Datenpaketübertragung mit der Basisstation genutzten Übertragungsphasen in eine Mithörphase. In dieser Mithörphase wird der Funkverkehr - insbesondere auf anderen Frequenzen als der Übertragungsfrequenz der zugeordneten Basisstation - abgehört, und es wird nach einer zur Datenpaketübertragung geeigneten, anderen (neuen) Basisstation gesucht. Ein Vorteil dieser Ausgestaltung des Verfahrens besteht darin, dass bei diesem für die Mobilstationen gezielt Zeitfenster geschaffen werden, in denen die Mobilstationen einen Hand-Over-Vorgang bei Bedarf vorbereiten können. Erreicht wird dies, indem jede Mobilstation nicht in jeder von der Basisstation "bereitgestellten" Übertragungsphase Datenpakete übertragen muss, sondern stattdessen davon regelmäßig für zumindest eine Übertragungsphase "befreit" wird. Durch das gezielte Auslassen von Übertragungsphasen wird ein zeitlicher Spielraum geschaffen, in dem die Mobilstationen den Funkverkehr auf anderen Frequenzen mithören können und andere, zur Datenübertragung besser geeignete Basisstationen auffinden können. Die beschriebene vorteilhafte Ausgestaltung des Verfahrens ist beispielsweise bei allen realzeitkritischen Datenströmen, insbesondere beispielsweise bei Audio- (z. B. nach dem "DECT"-Standard gebildeten Audio-Daten) oder Video-Datenströmen zu empfehlen, die nach WLAN-Verfahren übertragen werden, da ein quasi unterbrechungsfreier Hand-Over-Vorgang ermöglicht wird.

Als vorteilhaft wird es angesehen, wenn die Mobilstationen im Falle des Vorhandenseins einer geeigneten anderen Basisstation zur Vorbereitung des Hand-Over-Vorgangs eine parallele Verbindung mit der anderen Basisstation aufbauen, wobei für die parallele Verbindung Zeitfenster genutzt werden, die außerhalb der zur Datenpaketübermittlung mit der ursprünglichen Basisstation genutzten Übertragungsphasen liegen. Durch den Aufbau einer zwischenzeitlichen Parallelverbindung wird sichergestellt, dass ein Verlust von Datenpaketen beim Hand-Over-Vorgang vermieden wird.

Im Falle einer parallelen Datenpaketübermittlung wird es als vorteilhaft angesehen, wenn die Mobilstationen die Datenpakete für die ursprüngliche Basisstation unter Heranziehung der Beacon-Signale der ursprünglichen Basisstation und die Datenpakete für die andere (neue) Basisstation unter Heranziehung der Beacon-Signale der anderen (neuen) Basisstation erzeugen. Damit wird eine bestmögliche Synchronität der Datenströme am jeweiligen Umschaltort und damit ein "nahtloses Handover" bei der Umschaltung erreicht. Asynchronitäten, die sich durch voneinander abweichende Zeitbasen in den beteiligten Basisstationen (Zeitversatz zwischen den Beacon-Signalen der Basisstationen) ergeben, bewirken während der kurzen Dauer eines Hand-Over-Vorganges nur einen kleinen Synchronversatz der Datenströme von wenigen Abtastwerten am jeweiligen Umschaltort, der nicht oder nur kaum wahrnehmbar ist.

Vorzugsweise arbeiten die beiden Basisstationen mit unterschiedlichen Übertragungsfrequenzen. Die Beacon-Signale der beiden Basisstationen können zueinander asynchron sein. Bevorzugt werden die Beacon-Signale der beiden Basisstationen jeweils äquidistant erzeugt.

Das Verfahren kann beispielsweise nach dem eingangs beschriebenen WLAN-Standard durchgeführt werden; die Basisstationen werden demgemäß jeweils durch WLAN-Access-Points (AP's) gebildet. Nach der Abgabe der Beacon-Signale wird die Luftschnittstelle für den jeweiligen Frequenzbereich somit jeweils unter Bildung einer "Contention-free"-Periode belegt; zwischen den Übertragungsphasen wird die Luftschnittstelle im jeweiligen Frequenzbereich für "Contention"-Perioden freigegeben. Das Ende jeder Übertragungsphase kann beispielsweise jeweils durch die Abgabe eines "Contention-free-Ende-Signales" von der Basisstation angezeigt werden.

Als vorteilhaft wird es angesehen, wenn das Auslassen bzw. das Nutzen der Übertragungsphasen kontinuierlich derart erfolgt, dass jede Mobilstation eine Datenpaketübertragung ausschließlich in jeder m-ten Übertragungsphase durchführt, wobei "m" eine natürliche Zahl größer als "1" bezeichnet.

Besonders vorteilhaft ist es, wenn jede Mobilstation eine Datenpaketübertragung ausschließlich in jeder zweiten Übertragungsphase durchführt. In diesem letztgenannten Fall weisen die Datenpakete vorzugsweise einen Dateninhalt auf, dessen zeitliche Länge bzw. Dateninhalt dem Datenstrominhalt während dem Zweifachen des zeitlichen Abstandes zwischen zwei Beacon-Signalen entspricht; dadurch bleibt sichergestellt, dass der Datenstrom ohne Datenverlust übertragen wird.

Die für die parallele Verbindung genutzten Zeitfenster schließen vorzugsweise diejenigen Übertragungsphasen der ursprünglichen Basisstation ein, die bezüglich dieser Basisstation "ausgelassen" werden.

Nach erfolgtem Verbindungsaufbau mit der anderen Basisstation wird die parallele Verbindung mit der ursprünglichen Basisstation vorzugsweise beendet, um die Luftschnittstelle zu entlasten.

Sind an die Basisstation mehrere Mobilstationen angeschlossen, so wird es als vorteilhaft angesehen, wenn die Zuordnung der Mobilstationen zu den Übertragungsphasen, die zur Datenpaketübertragung mit der jeweiligen Basisstation genutzt werden, gleichmäßig erfolgt. Beispielsweise wird die Hälfte der Mobilstationen in allen "ungeraden" (erste, dritte, fünfte, usw.) Übertragungsphasen und die andere Hälfte der Mobilstationen in allen "geraden" (zweite, vierte, sechste, usw.) Übertragungsphasen zur Datenpaketübertragung herangezogen. Die Datenpakete sind dementsprechend jeweils derart zu "schnüren" bzw. zu bilden, dass trotz der Nutzung nur jeder zweiten Übertragungsphase empfängerseitig ein ununterbrochener, datenverlustfreier Empfangsdatenstrom gebildet werden kann; wird also nur jede zweite Übertragungsphase genutzt, so müssen die Datenpakete doppelt so groß sein bzw. doppelt so viele Nutzdaten umfassen, wie dies bei einer Datenpaketübertragung in jeder Übertragungsphase nötig wäre.

Vorzugsweise wird der zeitliche Abstand zwischen zwei aufeinanderfolgenden Beacon-Signalen mindestens doppelt so groß wie die Länge der jeweils dazwischen liegenden Übertragungsphase (Contention-free-Periode) gewählt, wenn von den Mobilstationen jeweils jede "zweite" Übertragungsphase ausgelassen wird. Die zeitliche Länge der Mithörphase der Mobilstationen beträgt in diesem Falle bevorzugt mindestens das 1,5-fache des zeitlichen Abstands zwischen zwei aufeinanderfolgenden Beacon-Signalen.

Der zeitliche Abstand zwischen zwei Beacon-Signalen kann beispielsweise zwischen 5ms und 15ms betragen; bei WLAN-Verbindungen wird beispielsweise ein Abstand von 10,24 ms gewählt. Der Beacon-Abstand ist damit bezüglich einer Audio-Verbindung (in der Regel eine 8 kHz-Verbindung) relativ kurz.

Die Erfindung bezieht sich außerdem auf eine Basisstation zum Betreiben einer Datenverbindung mit einer oder mehreren Mobilstationen.

Der Erfindung liegt bezüglich einer solchen Basisstation die Aufgabe zugrunde, zu ermöglichen, dass die auftretende Verzögerung bei der Übermittelung des Datenstroms möglichst minimal ist.

Diese Aufgabe wird erfindungsgemäß durch eine Basisstation mit einer Basisstation-Steuereinrichtung gelöst, die innerhalb von vorgegebenen Übertragungsphasen Datenpakete mit den Mobilstationen austauscht. Die Basisstation-Steuereinrichtung zeigt jeweils durch Abgabe eines Beacon-Signales den Beginn jeder Übertragungsphase an und reserviert die Luftschnittstelle für die jeweilige Übertragungsphase. Sie bildet außerdem mit Daten eines Datenstroms, insbesondere eines Sprach- und/oder Videodatenstroms, Datenpakete, wobei der Beginn und das Ende jeder Datenpaketbildung jeweils durch die Beacon-Signale getriggert wird. Anschließend werden die Datenpakete zu der zugeordneten Mobilstation übertragen.

Als vorteilhaft wird es angesehen, wenn die Basisstation-Steuereinrichtung außerdem den Mobilstationen die Übertragungsphasen derart zuordnet, dass jede Mobilstation nach erfolgter Datenpaketübertragung jeweils für zumindest eine nachfolgende Übertragungsphase von der Datenpaketübertragung ausgeschlossen bleibt.

Bezüglich der Vorteile der erfindungsgemäßen Basisstation sowie bezüglich weiterer vorteilhafter Ausgestaltungen der erfindungsgemäßen Basisstation wird auf die obigen Ausführungen im Zusammenhang mit dem erfindungsgemäßen Verfahren verwiesen.

Die Erfindung bezieht sich außerdem auf eine Mobilstation zum Betreiben einer Datenverbindung mit einer Basisstation.

Der Erfindung liegt bezüglich einer solchen Mobilstation die Aufgabe zugrunde, zu ermöglichen, dass die auftretende Verzögerung bei der Übermittelung des Datenstroms möglichst minimal ist.

Diese Aufgabe wird erfindungsgemäß durch eine Mobilstation mit einer Mobilstation-Steuereinrichtung gelöst, die innerhalb von vorgegebenen Übertragungsphasen Datenpakte mit der Basisstation austauscht, mit Daten eines Datenstroms, insbesondere eines Sprach- und/oder Videodatenstroms, Datenpakete bildet, wobei der Beginn und das Ende jeder Datenpaketbildung jeweils durch Beacon-Signale der Basisstation getriggert wird, und die Datenpakete zu der Basisstation überträgt.

Als vorteilhaft wird es angesehen, wenn die Basisstation-Steuereinrichtung außerdem nach erfolgter Datenpaketübertragung jeweils zumindest eine nachfolgende Übertragungsphase zur Datenpaketübertragung auslässt.

Bezüglich der Vorteile der erfindungsgemäßen Mobilstation sowie bezüglich weiterer vorteilhafter Ausgestaltungen der erfindungsgemäßen Mobilstation wird auf die obigen Ausführungen im Zusammenhang mit dem erfindungsgemäßen Verfahren verwiesen.

Zur Erläuterung der Erfindung zeigen
- Figur 1: beispielhaft eine Anordnung mit elf erfindungsgemäßen Mobilstationen und drei erfindungsgemäßen Basisstationen, anhand der Anordnung wird das erfindungsgemäße Verfahren erläutert,
- Figur 2: den Übertragungsverlauf beispielhaft vor einem Hand-Over-Vorgang,
- Figur 3: den Übertragungsverlauf beispielhaft während des Hand-Over-Vorgangs,
- Figur 4: den Übertragungsverlauf beispielhaft nach dem Hand- Over-Vorgang und
- Figur 5: beispielhaft einen Übertragungsvorgang im Detail.

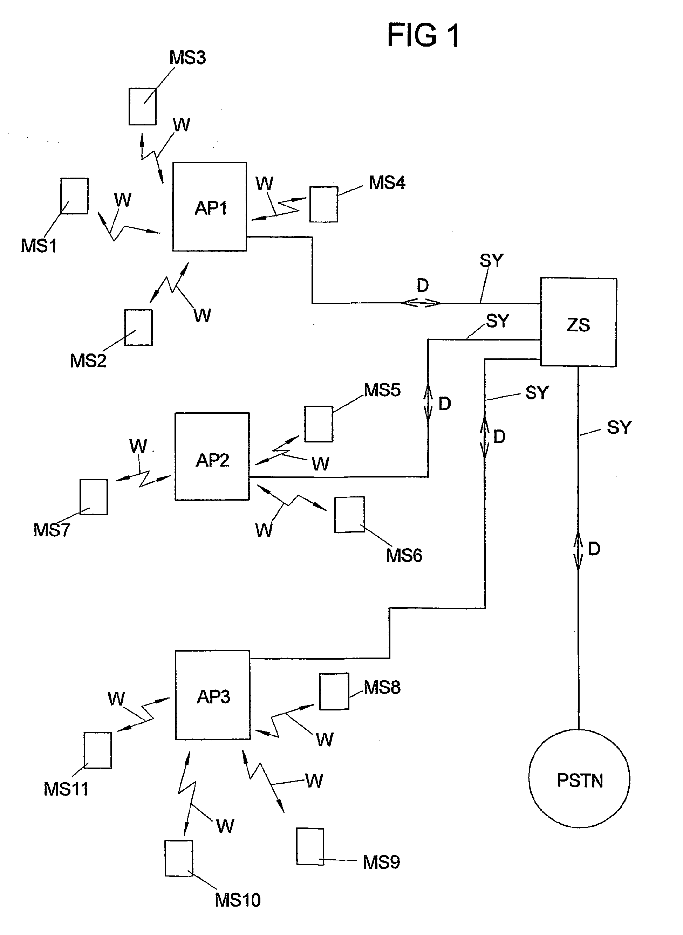

In der Figur 1 sieht man vier Mobilstationen MS1 bis MS4, die mit einem Access-Point AP1 in einer WLAN-Funkverbindung W stehen. In entsprechender Weise stehen drei Mobilstationen MS5 bis MS7 mit einem Access-Point AP2 und vier Mobilstationen MS8 bis MS11 mit einem Access-Point AP3 in einer WLAN-Funkverbindung W.

Die WLAN-Funkverbindungen W können beispielsweise nach dem Standard IEEE 802.11 a, b oder g mit HCF-QoS-Erweiterungen nach IEEE 802.11e durchgeführt werden. Die Funkübertragung erfolgt beispielsweise im MHz- oder GHz-Bereich.

Die drei Access-Points AP1, AP2 und AP3 sind jeweils mit einem Zentralen Switch ZS (Schalteinrichtung) verbunden, der an ein öffentliches Telefonnetz PSTN und/oder an das Internet angeschlossen ist. Die Verbindungen zwischen dem Zentralen Switch ZS und den Access-Points AP1, AP2 und AP3 einerseits und die Verbindung zwischen dem Zentralen Switch ZS und dem öffentlichen Telefonnetz PSTN andererseits sind jeweils beispielsweise durch eine synchrone Schnittstelle SY (z. B. ISDN-S0 oder Up0-Schnittstelle) oder eine paketorientierte Schnittstelle mit entsprechenden QoS-Vorkehrungen gebildet. Über diese Schnittstellen SY werden Datenströme D beispielsweise im kHz-Bereich (z. B. Telefonverbindung) übertragen.

Um bei der Umwandlung der Datenströme D in Funksignale für die WLAN-Verbindungsstrecke W so geringe Zeitverzögerungen bzw. einen so geringen Jitter wie möglich zu erreichen, werden die Datenpakete für die WLAN-Verbindungsstrecke W sowohl in den Access-Points AP1 bis AP3 als auch in den Mobilstationen MS1 bis MS11 "beacongetriggert" gebildet. Der Datenstrom D wird dabei in Pakete unterteilt, deren Paketinhalt stets dem Dateninhalt in einem Zeitfenster entspricht, dessen Zeitfensterlänge dem Doppelten des zeitlichen Abstands zweier unmittelbar aufeinanderfolgender Beacon-Signale gleicht. Eine Übertragung der Datenpakete zwischen den Access-Points AP1 bis AP3 und den jeweils zugeordneten Mobilstationen MS1 bis MS11 erfolgt daher jeweils nur in jeder zweiten Übertragungsphase; jede zweite Übertragungsphase wird somit ausgelassen.

Wenn sich beispielsweise die Signalqualität bei der Datenverbindung zwischen der Mobilstation MS2 und dem Access-Point AP1 verringert, so muss die Mobilstation MS2 nach einem anderen Access-Point mit besserer Übertragungsqualität suchen und eine Verbindung mit diesem herstellen. Da verschiedenen Access-Points verschiedene Frequenzen zugeordnet sind, muss die Mobilstation MS2 versuchsweise auf eine andere Frequenz umstimmen, auf ein Beacon auf dieser Frequenz warten, und - falls eines gefunden wird - die zugehörige Signalqualität, beispielsweise die Signalstärke, registrieren. Durch Wiederholung dieses "Scan-Vorgangs" bei verschiedenen Frequenzen wird eine Tabelle von möglichen Access-Points aufgebaut, um dann den optimalen Access-Point als Ziel des Hand-Overs auszusuchen.

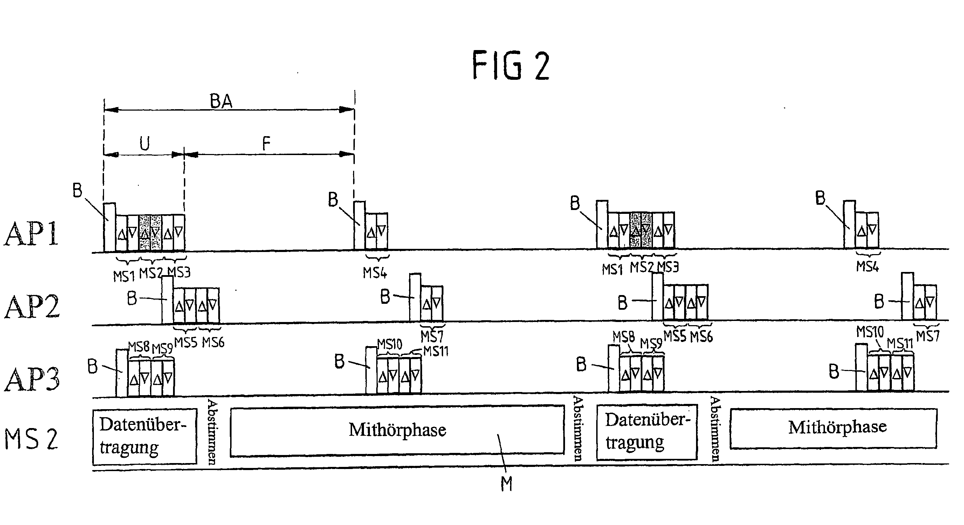

Problematisch ist nun, dass die Access-Points AP1 bis AP3 - im Gegensatz beispielsweise zu DECT-Basisstationen - nicht untereinander synchronisiert sind. Die Beacons (kurz für Beacon-Signale) der verschiedenen Access-Points stehen somit in beliebiger zeitlicher Position zueinander, obwohl sie jeweils dieselbe Beacon-Wiederholrate bzw. denselben Beacon-Abstand BA (vgl. Fig. 2) aufweisen. Beispielsweise können sich die Übertragungsphasen der Access-Points AP1 bis AP3 überlappen.

Da die Mobilstation MS2 die zeitliche Verschiebung der Beacon-Signale nicht kennen kann, muss sie - bei einem Beacon-Signalabstand von beispielsweise 10,24 ms - mindestens ca. 10 ms auf der jeweils neuen Frequenz lauschen, um ein mögliches Beacon-Signal abzufangen. Dieses könnte zu einem Unterbrechen des Datenstromes führen, weil in dem Zeitraum, in dem die Mobilstation MS2 auf eine andere Frequenz abgestimmt ist, keine Daten zu dem alten, ursprünglichen Access Point AP1 übertragen werden können.

Um ein solches Unterbrechen des Datenstromes zu verhindern, teilt jeder Access-Point AP1 bis AP3 die Übertragungsphasen so ein, dass jede zugeordnete Mobilstation nach jeder genutzten Übertragungsphase jeweils mindestens eine Übertragungsphase auslässt. Beispielsweise sendet und empfängt jede Mobilstation nur in jeder zweiten Periode Datenpakete.

Dies zeigt beispielhaft die Figur 2, in der der Zeitverlauf der Datenpaketübertragung zwischen den Access-Points AP1 bis AP3 und den Mobilstationen MS1 bis MS11 dargestellt ist. Jeweils ein "Δ"-Zeichen stellt dabei eine Übertragung in Richtung Mobilstation und das jeweils um 180 Grad umgedrehte Zeichen eine Übertragung in Richtung Access-Point dar. Die Beacon-Signale sind mit dem Bezugszeichen B gekennzeichnet und weisen einen Beacon-Abstand BA von beispielsweise 10,24 ms auf.

Die durch die Beacon-Signale B getriggerte Übertragungsphase - bzw. "contention-free-Periode" - ist in der Figur 2 mit dem Bezugszeichen U markiert. An jede Übertragungsphase U schließt sich jeweils eine Übertragungspause ("contention-Periode") F an, in der die Luftstrecke für den jeweiligen Frequenzbereich freigegeben ist.

Da jede Mobilstation MS1 bis MS13 jeweils nur jede zweite Übertragungsphase nutzt, wird die Datenmenge pro Übertragungsphase jeweils - gegenüber einer "normalen" Übertragung in jeder Übertragungsphase - verdoppelt, um die benötigte mittlere Datenrate zu erhalten.

Wie sich in der Figur 2 erkennen lässt, sind die jedem Access-Point zugeordneten Mobilstationen vorzugsweise gleichmäßig auf die "geraden" und "ungeraden" Beacons bzw. Übertragungsphasen verteilt, um eine gleichmäßige Auslastung der Übertragungsphasen zu erreichen.

Da nur jede zweite Übertragungsphase bezüglich des Access-Points AP1 genutzt wird, hat die Mobilstation MS2 zwischen den Datenübertragungen zu dem zugeordneten Access-Point AP1 genügend Zeit, um auf eine andere Frequenz umzustimmen, dort nach einem Beacon zu suchen, und rechtzeitig auf die alte Frequenz zurückzustimmen. Der zentrale Punkt ist, dass die Beaconperiode immer noch 10,24 ms beträgt, obwohl der Abstand zwischen den tatsächlich genutzten Übertragungsphasen - gegenüber einer "normalen" Nutzung aller Übertragungsphasen - verdoppelt ist.

Vorzugsweise ist der zeitliche Abstand zwischen zwei aufeinanderfolgenden Beacon-Signalen - hier 10,24 ms - mindestens doppelt so groß wie die Länge der jeweils dazwischen liegenden Contention-free-Periode U; dies bedeutet, dass die Übertragungsphasen maximal jeweils 5,12 ms dauern dürfen. Entsprechend kann die zeitliche Länge der Mithörphase M der Mobilstation MS2 das 1,5-fache des zeitlichen Abstands zwischen zwei aufeinanderfolgenden Beacon-Signalen betragen, also ca. 15 ms. Demnach muss in dieser Mithörphase von 15 ms mindestens ein Beacon auf der neuen Frequenz erkennbar sein, unabhängig davon, wie die Beacons der drei unsynchronisierten Access Points AP1 bis AP3 gegeneinander verschoben sind, weil der Beacon-Abstand bei allen Access-Points jeweils 10,24 ms beträgt.

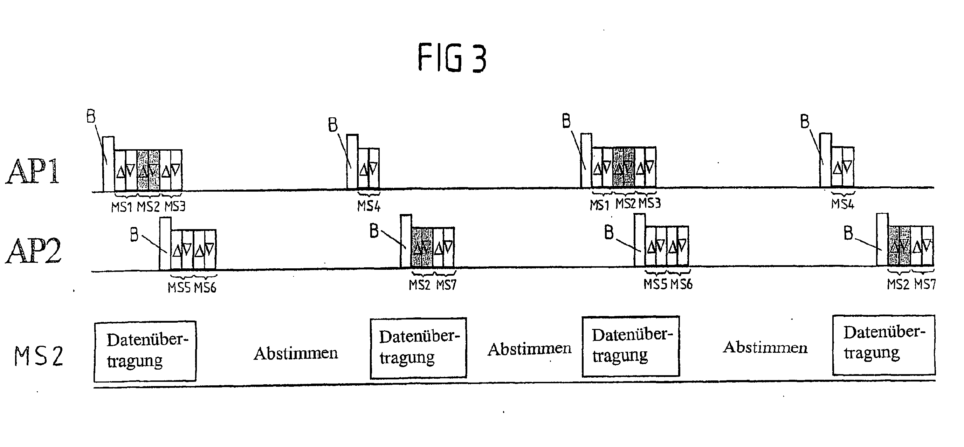

Wenn sich - wie bereits oben im Zusammenhang mit der Figur 1 erwähnt - beispielsweise die Signalqualität bei der Datenverbindung zwischen der Mobilstation MS2 und dem Access-Point AP1 verringert, so scannt die Mobilstation MS2 die Luftschnittstelle bei verschiedenen Frequenzen nach vorhandenen Access Points ab. Wird dabei beispielsweise festgestellt, dass der Access-Point AP2 für einen Hand-Over-Vorgang geeignet ist, so wird die Mobilstation MS2 mit dem neuen Access-Point AP2 eine parallele Datenverbindung aufbauen. Dies zeigt die Figur 3 im Detail.

Wie sich in der Figur 3 erkennen lässt, ist die Zuordnung zum "geraden" oder "ungeraden" Beacon auf der neuen Frequenz des neuen Acccess Points AP2 so gewählt, dass tatsächlich zwei parallele Datenströme möglich sind; dies bedeutet beispielsweise, dass die Mobilstation MS2 eine "ungerade" Übertragungsphase bezüglich des neuen Acccess Points AP2 wählen muss, wenn sie in einer "geraden" Übertragungsphase bezüglich des alten, ursprünglichen Acccess Points AP1 steht. In der Hand-Over-Phase überträgt die Mobilstation MS2 im Schnitt alle 10,24 ms Daten, welche abwechselnd an den alten und den neuen Acccess Point gerichtet sind.

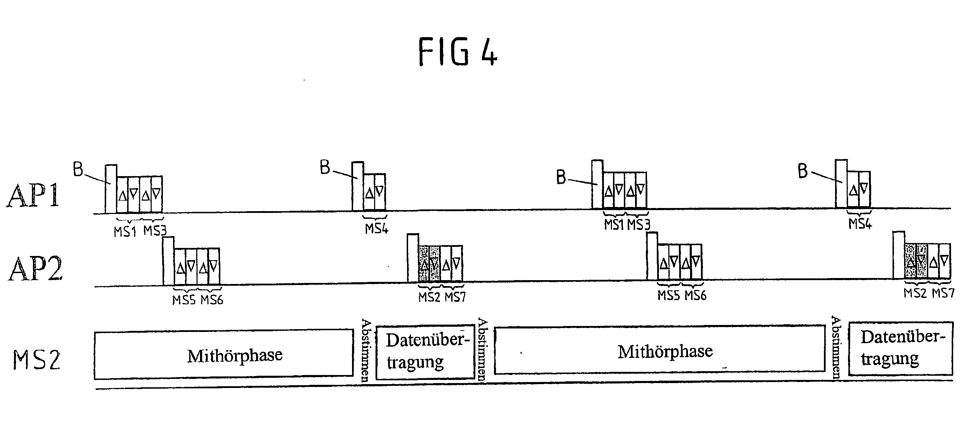

Sobald der Aufbau der parallelen Datenverbindung abgeschlossen ist, wird die Verbindung zu dem ursprünglichen Access Point AP1 abgebrochen; dies zeigt die Figur 4.

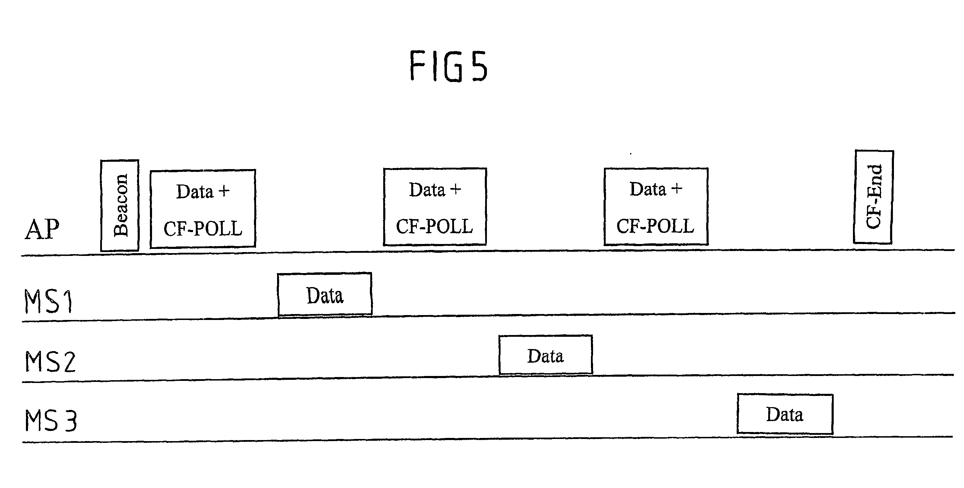

In der Figur 5 ist zum besseren Verständnis nochmals die Datenverbindung zwischen dem Access Point AP1 und den drei Mobilstationen MS1 bis M3 in der "ersten" Übertragungsphase gemäß der Figur 2 dargestellt. Man erkennt, dass der Access Point AP1 zunächst Datenpakete "DATA" zur Mobilstation MS1 übermittelt. Sobald dieser Vorgang abgeschlossen ist, werden durch ein Signal CF-Poll Datenpakete "DATA" der Mobilstation MS1 angefordert. Nachfolgend wird dieser Vorgang des Sendens und "Anforderns" von Datenpaketen mit den Mobilstationen MS2 und MS3 wiederholt. Die "Contention-free-Periode" kann beispielsweise durch ein Contention-free-Ende-Signal CF-End beendet werden.

Die Datenpakete "DATA" enthalten stets einen Dateninhalt, der zeitlich dem Doppelten des zeitlichen Abstands BA zweier unmittelbar aufeinanderfolgender Beacon-Signale B entspricht. Die Datenpakete "DATA" enthalten somit Daten des Datenstromes D für eine Zeitspanne von 2*BA.

## Patentansprüche

1. Verfahren zum Betreiben einer Datenverbindung zwischen einer Basisstation (AP1) und einer oder mehreren Mobilstationen (MS2),
- bei dem innerhalb von Übertragungsphasen (U) Datenpakete (DATA) zwischen der Basisstation (AP1) und den Mobilstationen (MS2) übertragen werden und
- jeweils durch Abgabe eines Startsignals (B) der Beginn jeder Übertragungsphase (U) angezeigt und die Übertragungsschnittstelle (W) zwischen der Basisstation (AP1) und den Mobilstationen (MS2) für die jeweilige Übertragungsphase (U) durch die Basisstation (AP1) verwaltet wird, wobei
- die Datenpakete (DATA) mit Daten eines Datenstroms (D) gebildet werden und
- wobei mit den empfangenen Datenpaketen ein Empfangsdatenstrom gebildet wird,
**dadurch gekennzeichnet, dass**
- der Beginn und das Ende jeder Datenpaketbildung jeweils durch die Startsignale (B) getriggert wird.

2. Verfahren nach Anspruch 1, **dadurch gekennzeichnet, dass** das Startsignal ein Beacon-Signal (B) ist.

3. Verfahren nach einem der Ansprüche 1 oder 2, **dadurch gekennzeichnet, dass** die Übertragungsschnittstelle (W) als Luftschnittstelle ausgestaltet ist.

4. Verfahren nach einem der Ansprüche 1 bis 3, **dadurch gekennzeichnet, dass** die Datenpakete (DATA) zwischen der Basisstation (AP1) und der Mobilstation (MS2) jeweils in derjenigen Übertragungsphase (U) übertragen werden, deren Beginn durch das Beacon-Signal (B) angezeigt wird, das auch das Ende der jeweiligen Datenpaketbildung triggert.

5. Verfahren nach einem der voranstehenden Ansprüche, **dadurch gekennzeichnet, dass** die empfangenen Datenpakete (DATA) jeweils bis zum Ende einer vorgegebenen Speicherzeitspanne nach Auftreten des die jeweilige Übertragungsphase (U) auslösenden Beacon-Signals (B) zwischengespeichert werden, bevor mit den empfangenen Datenpaketen (DATA) der Empfangsdatenstrom gebildet wird.

6. Verfahren nach Anspruch 5, **dadurch gekennzeichnet, dass** die vorgegebene Speicherzeitspanne von der Zeitdauer zwischen zwei aufeinanderfolgenden Beacon-Signalen (B) abhängt.

7. Verfahren nach Anspruch 6, **dadurch gekennzeichnet, dass** die vorgegebene Speicherzeitspanne der Hälfte der Zeitdauer zwischen zwei aufeinanderfolgenden Beacon-Signalen (B) entspricht.

8. Verfahren nach einem der Ansprüche 1 bis 5, **dadurch gekennzeichnet, dass** die empfangenen Datenpakete (DATA) bis zum Ende der jeweiligen Übertragungsphase (U) zwischengespeichert werden, bevor mit den empfangenen Datenpaketen (DATA) der Empfangsdatenstrom gebildet wird.

9. Verfahren nach einem der voranstehenden Ansprüche, **dadurch gekennzeichnet, dass** die Datenpakete (DATA) mit realzeitkritischen Datenströmen (D) gebildet und im Rahmen der Datenpaketübertragung übertragen werden.

10. Verfahren nach einem der voranstehenden Ansprüche, **dadurch gekennzeichnet, dass** die Datenpakete (DATA) mit realzeitkritischen Audio- und/oder Videodatenströmen gebildet und im Rahmen der Datenpaketübertragung übertragen werden.

11. Verfahren nach einem der voranstehenden Ansprüche, **dadurch gekennzeichnet, dass** die Datenpakete (DATA) einen Dateninhalt aufweisen, dessen zeitliche Länge einem Mehrfachen, vorzugsweise dem Zweifachen, des zeitlichen Abstandes zwischen zwei Beacon-Signalen (B) entspricht.

12. Verfahren nach einem der voranstehenden Ansprüche, **dadurch gekennzeichnet, dass** mit den Beacon-Signalen (B) jeweils der Beginn einer Contention-free-Periode (U) angezeigt wird.

13. Verfahren nach einem der voranstehenden Ansprüche, **dadurch gekennzeichnet, dass** zwischen den Übertragungsphasen (U) die Luftschnittstelle im jeweiligen Frequenzbereich für Contention-Perioden (F) freigegeben wird.

14. Verfahren nach einem der voranstehenden Ansprüche, **dadurch gekennzeichnet, dass** die Datenpaketübertragung in einem WLAN-Standard erfolgt und die Basisstation (AP1) durch einen WLAN-Access-Point gebildet wird.

15. Verfahren nach einem der voranstehenden Ansprüche, **dadurch gekennzeichnet, dass** der zeitliche Abstand zwischen zwei Beacon-Signalen (B) zwischen 5ms und 15ms beträgt.

16. Verfahren nach einem der voranstehenden Ansprüche, **dadurch gekennzeichnet, dass** jede Mobilstation (MS2) nach erfolgter Datenpaketübertragung jeweils für zumindest eine nachfolgende Übertragüngsphase (U) von der Datenpaketübertragung ausgelassen wird.

17. Verfahren nach Anspruch 16, **dadurch gekennzeichnet, dass** jede Mobilstation (MS2) zur Datenpaketübertragung ausschließlich in jeder m-ten Übertragungsphase (U) zugelassen wird, wobei "m" eine natürliche Zahl größer als "1" bezeichnet.

18. Verfahren nach Anspruch 16, **dadurch gekennzeichnet, dass** jede Mobilstation (MS2) zur Datenpaketübertragung ausschließlich in jeder zweiten Übertragungsphase (U) zugelassen wird.

19. Verfahren nach einem der voranstehenden Ansprüche, **dadurch gekennzeichnet, dass** die Mobilstationen (MS2) außerhalb der zur Datenpaketübertragung mit der Basisstation (AP1) genutzten Übertragungsphasen (U) in eine Mithörphase (M) schalten, in der der Funkverkehr abgehört wird.

20. Verfahren nach Anspruch 19, **dadurch gekennzeichnet, dass** in den Mithörphasen (M) nach einer zur Datenpaketübertragung geeigneten, anderen Basisstation (AP2) gesucht wird.

21. Verfahren nach Anspruch 20, **dadurch gekennzeichnet, dass** die Mobilstationen im Falle des Vorhandenseins einer geeigneten anderen Basisstation (AP2) zur Vorbereitung eines Hand-Over-Vorgangs eine parallele Verbindung mit der anderen Basisstation (AP2) aufbauen, wobei für die parallele Verbindung Zeitfenster genutzt werden, die außerhalb der zur Datenpaketübermittlung mit der ursprünglichen Basisstation (AP1) genutzten Übertragungsphasen (U) liegen.

22. Verfahren nach einem der voranstehenden Ansprüche, **dadurch gekennzeichnet, dass** die beiden Basisstationen (AP1, AP2) mit unterschiedlichen Übertragungsfrequenzen arbeiten und die Beacon-Signale (B) der beiden Basisstationen (AP1, AP2) zueinander asynchron sind.

23. Verfahren nach einem der voranstehenden Ansprüche 21 oder 22, **dadurch gekennzeichnet, dass** die Beacon-Signale (B) der beiden Basisstationen (AP1, AP2) jeweils äquidistant erzeugt werden.

24. Verfahren nach Anspruch 21, 22 oder 23, **dadurch gekennzeichnet, dass** die Mobilstationen (MS2) die Datenpakete für die ursprüngliche Basisstation (AP1) unter Heranziehung der Beacon-Signale (B) der ursprünglichen Basisstation (AP1) und die Datenpakete (DATA) für die andere Basisstation (AP2) unter Heranziehung der Beacon-Signale (B) der anderen Basisstation (AP2) erzeugen.

25. Verfahren nach einem der voranstehenden Ansprüche 21 bis 24, **dadurch gekennzeichnet, dass** die für die parallele Verbindung genutzten Zeitfenster die bezüglich der ursprünglichen Basisstation (AP1) ausgelassenen Übertragungsphasen (U) einschließen.

26. Verfahren nach einem der voranstehenden Ansprüche 21 bis 25, **dadurch gekennzeichnet, dass** nach erfolgtem Verbindungsaufbau mit der anderen Basisstation (AP2) die parallele Verbindung mit der ursprünglichen Basisstation (AP1) beendet wird.

27. Verfahren nach einem der voranstehenden Ansprüche, **dadurch gekennzeichnet, dass** die Zuordnung der Mobilstationen (MS2) zu den Übertragungsphasen (U), die zur Datenpaketübertragung mit der Basisstation (AP1) genutzt werden, gleichmäßig erfolgt.

28. Verfahren nach einem der voranstehenden Ansprüche, **dadurch gekennzeichnet, dass** der zeitliche Abstand zwischen zwei aufeinanderfolgenden Beacon-Signalen (B) mindestens doppelt so groß wie die Länge der jeweils dazwischen liegenden Contention-free-Periode (U) gewählt wird.

29. Verfahren nach einem der voranstehenden Ansprüche 19 bis 28, **dadurch gekennzeichnet, dass** die zeitliche Länge der Mithörphase (M) der Mobilstationen (MS2) mindestens das 1,5-fache des zeitlichen Abstands zwischen zwei aufeinanderfolgenden Beacon-Signalen (B) beträgt.

30. Basisstation (AP1, AP2) zum Betreiben einer Datenverbindung zwischen einer Basisstation (AP1, AP2) und einer oder mehreren Mobilstationen (MS2), wobei die Basisstation (AP1, AP2) eine Basisstation-Steuereinrichtung aufweist, die derart ausgestaltet ist, dass sie
- innerhalb von Übertragungsphasen (U) Datenpakete (DATA) mit den Mobilstationen (MS2) austauscht und jeweils durch Abgabe eines Beacon-Signales (B) den Beginn jeder Übertragungsphase (U) anzeigt und die Luftschnittstelle für die jeweilige Übertragungsphase (U) reserviert,
- mit Daten eines Datenstroms (D) Datenpakete (DATA) bildet und
- die Datenpakete (DATA) zu der zugeordneten Mobilstation (MS2) überträgt,
**dadurch gekennzeichnet, dass**
der Beginn und das Ende jeder Datenpaketbildung jeweils durch die Beacon-Signale (B) getriggert wird.

31. Basisstation (AP1, AP2) nach Anspruch 30, **dadurch gekennzeichnet, dass** der Datenstrom (D) ein Sprach- und/oder Videodatenstrom ist.

32. Basisstation nach Anspruch 30 oder 31, **dadurch gekennzeichnet, dass** die Basisstation-Steuereinrichtung derart ausgestaltet ist, dass sie den Mobilstationen (MS2) die Übertragungsphasen (U) derart zuordnet, dass jede Mobilstation (MS2) nach erfolgter Datenpaketübertragung jeweils für zumindest eine nachfolgende Übertragungsphase (U) von der Datenpaketübertragung ausgeschlossen bleibt.

33. Mobilstation (MS2) zum Betreiben einer Datenverbindung mit einer Basisstation (AP1, AP2), wobei die Mobilstation (MS2) eine Mobilstation-Steuereinrichtung aufweist, die derart ausgestaltet ist, dass sie
- innerhalb von Übertragungsphasen (U) Datenpakete (DATA) mit der Basisstation (AP1, AP2) austauscht,
- mit Daten eines Datenstroms (D) Datenpakete (DATA) bildet, und
- die Datenpakete (DATA) zu der Basisstation (AP1, AP2) überträgt,
**dadurch gekennzeichnet, dass**
der Beginn und das Ende jeder Datenpaketbildung jeweils durch Beacon-Signale (B) der Basisstation (AP1, AP2) getriggert wird.

34. Mobilstation (MS2) nach Anspruch 33, **dadurch gekennzeichnet, dass** der Datenstrom (D) ein Sprach- und/oder Videodatenstrom ist.

35. Mobilstation nach Anspruch 33 oder 34, **dadurch gekennzeichnet, dass** die Mobilstation-Steuereinrichtung derart ausgestaltet ist, dass sie nach erfolgter Datenpaketübertragung jeweils zumindest eine nachfolgende Übertragungsphase (U) zur Datenpaketübertragung auslässt.

## Claims

1. Process for the operation of a data link between a base station (AP1) and one or several mobile stations (MS2),
- wherein within transmission phases (U) data packets (DATA) are transmitted between the base station (AP1) and the mobile stations (MS2) and
- each time, through emission of a start signal (B), the start of each transmission phase (U) is indicated and the transmission interface (W) between the base station (AP1) and the mobile stations (MS2) for the transmission phase (U) in question is managed by the base station (AP1), wherein
- the data packets (DATA) are formed with the data of a data stream (D) and
- wherein a received data stream is formed with the received data packets,
**characterised in that**
- the start and the end of each data packet forming operation is each time triggered by the start signals (B).

2. Process according to claim 1, **characterised in that** the start signal is a beacon signal (B).

3. Process according to either claim 1 or claim 2, **characterised in that** the transmission interface (W) is configured as an air interface.

4. Process according to any one of claims 1 to 3, **characterised in that** the data packets (DATA) are transmitted between the base station (AP1) and the mobile station (MS2) each time **in that** transmission phase (U) whose start is indicated by the beacon signal (B), which also triggers the end of the respective data packet forming operation.

5. Process according to any one of the foregoing claims, **characterised in that** the received data packets (DATA) are temporarily stored each time until the end of a predefined storage period after the occurrence of the beacon signal (B) triggering the transmission phase (U) in question, before the received data stream is formed with the received data packets (DATA).

6. Process according to claim 5, **characterised in that** the predefined storage period depends on the time period between two consecutive beacon signals (B).

7. Process according to claim 6, **characterised in that** the predefined storage period corresponds to half of the time period between two consecutive beacon signals (B).

8. Process according to any one of claims 1 to 5, **characterised in that** the received data packets (DATA) are temporarily stored until the end of the transmission phase (U) in question, before the received data stream is formed with the received data packets (DATA).

9. Process according to any one of the foregoing claims, **characterised in that** the data packets (DATA) are formed with real-time critical data streams (D), and are transmitted in the course of data packet transmission.

10. Process according to any one of the foregoing claims, **characterised in that** the data packets (DATA) are formed with real-time critical audio and/or video data streams and are transmitted in the course of data packet transmission.

11. Process according to any one of the foregoing claims, **characterised in that** the data packets (DATA) have a data content whose duration corresponds to a multiple of, preferably double, the time interval between two beacon signals (B).

12. Process according to any one of the foregoing claims, **characterised in that** the start of a contention-free period (U) is indicated each time by the beacon signals (B).

13. Process according to any one of the foregoing claims, **characterised in that** between the transmission phases (U) the air interface in the frequency range in question is released for contention periods (F).

14. Process according to any one of the foregoing claims, **characterised in that** the data packet transmission takes place using a WLAN standard and the base station (AP1) is constituted by a WLAN access point.

15. Process according to any one of the foregoing claims, **characterised in that** the time interval between two beacon signals (B) is between 5 msecs and 15 msecs.

16. Process according to any one of the foregoing claims, **characterised in that** each mobile station (MS2) is, after data packet transmission has been effected, in each case omitted from the data packet transmission for at least one subsequent transmission phase (U).

17. Process according to claim 16, **characterised in that** each mobile station (MS2) is authorised for the data packet transmission exclusively in every m-th transmission phase (U), where "m" denotes a whole number greater than "1".

18. Process according to claim 16, **characterised in that** each mobile station (MS2) is authorised for the data packet transmission exclusively in every second transmission phase (U).

19. Process according to any one of the foregoing claims, **characterised in that** outside the transmission phases (U) used for the data packet transmission with the base station (AP1) the mobile stations (MS2) switch into a monitoring phase (M), in which the radio traffic is listened to.

20. Process according to claim 19, **characterised in that** in the monitoring phases (M) another base station (AP2) suitable for the data packet transmission is sought.

21. Process according to claim 20, **characterised in that** in the event of the availability of a suitable other base station (AP2) for the preparation of a handover procedure the mobile stations set up a parallel link with the other base station (AP2), wherein time windows are used for the parallel link which lie outside the transmission phases (U) used for the data packet transfer with the original base station (AP1).

22. Process according to any one of the foregoing claims, **characterised in that** the two base stations (AP1, AP2) operate with different transmission frequencies and the beacon signals (B) of both base stations (AP1, AP2) are mutually asynchronous.

23. Process according to either claim 21 or claim 22, **characterised in that** the beacon signals (B) of the two base stations (AP1, AP2) are generated in each time in an equidistant manner.

24. Process according to claim 21, 22 or 23, **characterised in that** the mobile stations (MS2) create the data packets for the original base station (AP1) at the instigation of the beacon signals (B) of the original base station (AP1) and the data packets (DATA) for the other base station (AP2) at the instigation of the beacon signals (B) of the other base station (AP2).

25. Process according to any one of the foregoing claims 21 to 24, **characterised in that** the time windows used for the parallel link include the transmission phases (U) omitted in relation to the original base station (AP1).

26. Process according to any one of the foregoing claims 21 to 25, **characterised in that** after link creation with the other base station (AP2) has been effected the parallel link with the original base station (AP1) is ended.

27. Process according to any one of the foregoing claims, **characterised in that** the assignment of the mobile stations (MS2) to the transmission phases (U) which are used for the data packet transmission with the base station (AP1) is effected evenly.

28. Process according to any one of the foregoing claims, **characterised in that** the time interval between two consecutive beacon signals (B) is selected to be at least twice as large as the length of the contention-free periods (U) in each case lying between them.

29. Process according to any one of the foregoing claims 19 to 28, **characterised in that** the duration of the monitoring phase (M) of the mobile stations (MS2) is at least 1.5 times the time interval between two consecutive beacon signals (B).

30. Base station (AP1, AP2) for the operation of a data link between a base station (AP1, AP2) and one or several mobile stations (MS2), wherein the base station (AP1, AP2) has a base station control device which is configured such that it
- exchanges data packets (DATA) with the mobile stations (MS2) within transmission phases (U) and by emission of a beacon signal (B) each time indicates the start of each transmission phase (U) and reserves the air interface for the transmission phase (U) in question and
- forms data packets (DATA) with data from a data stream (D), and
- the data packets (DATA) are transmitted to the assigned mobile station (MS2),
**characterized in that**
the start and the end of each data packet forming operation is each time triggered by the beacon signals (B).

31. Base station (AP1, AP2) according to claim 30, **characterised in that** the data stream (D) is a speech and/or video data stream.

32. Base station according to either claim 30 or claim 31, **characterised in that** the base station control device is configured such that it assigns the transmission phases (U) to the mobile stations (MS2) in such a manner that each mobile station (MS2), after data packet transmission has been effected, in each case remains excluded from the data packet transmission for at least one subsequent transmission phase (U).

33. Mobile station (MS2) for the operation of a data link with a base station (AP1, AP2), wherein the mobile station (MS2) has a mobile station control device which is configured such that it
- exchanges data packets (DATA) with the base station (AP1, AP2) within transmission phases (U),
- forms data packets (DATA) with data from a data stream (D), and
- transmits the data packets to the base station,
**characterized in that**
the start and the end of each data packet forming operation is each time triggered by beacon signals (B) of the base station (AP1, AP2).

34. Mobile station (MS2) according to claim 33, **characterised in that** the data stream (D) is a speech and/or video data stream.

35. Mobile station according to either claim 33 or claim 34, **characterised in that** the mobile station control device is configured such that, after data packet transmission has been effected, it omits at least one subsequent transmission phase (U) for the data packet transmission.

## Revendications

1. Procédé pour le fonctionnement d'une connexion de données entre une station de base (AP1) et une ou plusieurs stations mobiles (MS2),
- dans lequel, pendant des phases de transmission (U), on transmet des paquets de données (DATA) entre la station de base (AP1) et les stations mobiles (MS2) et
- à chaque fois, par émission d'un signal de démarrage (B), le commencement de chaque phase de transmission (U) est affiché et l'interface de transmission (W) entre la station de base (AP1) et les stations mobiles (MS2) pour la phase de transmission respective (U) est gérée par la station de base (AP1),
- dans lequel les paquets de données (DATA) sont formés avec des données d'un flux de données (D), et
- dans lequel un flux de données de réception est formé avec les paquets de données reçues,
**caractérisé en ce que** le
- le commencement et la fin de chaque formation de paquets de données sont déclenchés à chaque fois par les signaux de démarrage (B).

2. Procédé selon la revendication 1, **caractérisé en ce que** le signal de démarrage est un signal de balise (B).

3. Procédé selon l'une des revendications 1 ou 2, **caractérisé en ce que** l'interface de transmission (W) est conçue comme une interface aérienne.

4. Procédé selon l'une des revendications 1 à 3, **caractérisé en ce que** les paquets de données (DATA) sont transmis entre la station de base (AP1) et la station mobile (MS2) respectivement dans celle des phases de transmission (U) dont le commencement est indiqué par le signal de balise (B) qui déclenche également la fin de la formation du paquet de données respectif.

5. Procédé selon l'une des revendications précédentes, **caractérisé en ce que** les paquets de données reçus (DATA) sont mémorisés de façon intermédiaire à chaque fois jusqu'à la fin d'un intervalle temporel de mémorisation prédéterminé après apparition du signal de balise (B) qui déclenche la phase de transmission respective (U) avant de former le flux de données reçues avec les paquets de données reçus (DATA).

6. Procédé selon la revendication 5, **caractérisé en ce que** l'intervalle temporel de mémorisation prédéterminé dépend de la durée temporelle entre deux signaux de balise (B) successifs.

7. Procédé selon la revendication 6, **caractérisé en ce que** l'intervalle temporel de mémorisation prédéterminé correspond à la moitié de la durée entre deux signaux de balise (B) successifs.

8. Procédé selon l'une des revendications 1 à 5, **caractérisé en ce que** les paquets de données reçus (DATA) sont mémorisés de façon intermédiaire jusqu'à la fin de la phase de transmission respective (U) avant de former le flux de données reçues avec les paquets de données reçus (DATA).

9. Procédé selon l'une des revendications précédentes, **caractérisé en ce que** les paquets de données (DATA) sont formés avec des flux de données (D) critiques en temps réel et sont transmis dans le cadre de la transmission des paquets de données.

10. Procédé selon l'une des revendications précédentes, **caractérisé en ce que** les paquets de données (DATA) sont formés avec des flux de données audio et/ou vidéo critiques en temps réel et sont transmis dans le cadre de la transmission des paquets de données.

11. Procédé selon l'une des revendications précédentes, **caractérisé en ce que** les paquets de données (DATA) comprennent un contenu de données dont la longueur temporelle correspond à un multiple, de préférence au double, de l'écart temporel entre deux signaux de balise (B).

12. Procédé selon l'une des revendications précédentes, **caractérisé en ce que** l'on indique avec les signaux de balise (B) à chaque fois le commencement d'une période "Contention-free" (sans conflit) (U).

13. Procédé selon l'une des revendications précédentes, **caractérisé en ce que** l'interface aérienne est rendue libre dans la plage de fréquence respective pour des périodes de "Contention" (conflit) (F) entre les phases de transmission (U).

14. Procédé selon l'une des revendications précédentes, **caractérisé en ce que** la transmission des paquets de données a lieu dans un standard "WLAN" (réseau local sans fil) et la station de base (AP1) est formé par un point d'accès du réseau local sans fil.

15. Procédé selon l'une des revendications précédentes, **caractérisé en ce que** l'écart temporel entre deux signaux de balise (B) est entre 5 ms et 15 ms.

16. Procédé selon l'une des revendications précédentes, **caractérisé en ce que**, après qu'une transmission de paquets de données a eu lieu, chaque station mobile (MS2) est exclue de la transmission des paquets de données à chaque fois pour au moins une phase de transmission successive (U).

17. Procédé selon la revendication 16, **caractérisé en ce que** chaque station mobile (MS2) est autorisée pour la transmission de paquets de données exclusivement dans chaque m-ième phase de transmission (U), où "m" désigne un nombre naturel supérieur à "1".

18. Procédé selon la revendication 16, **caractérisé en ce que** chaque station mobile (MS2) est autorisée pour la transmission de paquets de données exclusivement dans chaque phase de transmission (U) sur deux.

19. Procédé selon l'une des revendications précédentes, **caractérisé en ce que**, en dehors des phases de transmission (U) utilisées pour la transmission de paquets de données avec la station de base (AP1), les stations mobiles (MS2) commutent dans une phase d'écoute (M) dans laquelle le trafic radio est écouté.

20. Procédé selon la revendication 19, **caractérisé en ce que**, dans les phases d'écoute (M), on recherche une autre station de base (AP2) appropriée pour la transmission de paquets de données.

21. Procédé selon la revendication 20, **caractérisé en ce que**, en cas de présence d'une autre station de base (AP2) appropriée, les stations mobiles établissent une liaison parallèle avec l'autre station de base (AP2) pour la préparation d'un processus de "Hand-Over" (transfert), dans lequel on utilise, pour la liaison parallèle, des fenêtres temporelles qui se trouvent à l'extérieur des phases de transmission (U) utilisées pour la transmission de paquets de données avec la station de base d'origine (AP1).

22. Procédé selon l'une des revendications précédentes, **caractérisé en ce que** les deux stations de base (AP1, AP2) fonctionnent avec des fréquences de transmission différentes et les signaux de balise (B) des deux stations de base (AP2, AP2) sont asynchrones l'un par rapport à l'autre.

23. Procédé selon l'une des revendications précédentes 21 ou 22, **caractérisé en ce que** les signaux de balise (B) des deux stations de base (AP1, AP2) sont engendrés à chaque fois de manière équidistante.

24. Procédé selon la revendication 21, 22 ou 23, **caractérisé en ce que** les stations mobiles (MS2) génèrent les paquets de données pour la station de base d'origine (AP2) en utilisant les signaux de balise (B) de la station de base d'origine (AP1), et génèrent les paquets de données (DATA) pour l'autre station de base (AP2) en utilisant les signaux de balise (B) de l'autre station de base (AP2).

25. Procédé selon l'une des revendications précédentes 21 à 24, **caractérisé en ce que** les fenêtres temporelles utilisées pour la connexion parallèle incluent les phases de transmission (U) exclues vis-à-vis de la station de base d'origine (AP1).

26. Procédé selon l'une des revendications précédentes 21 à 25, **caractérisé en ce que**, une fois que l'établissement de la connexion a eu lieu avec l'autre station de base (AP2), la connexion parallèle avec la station de base d'origine (AP1) est terminée.

27. Procédé selon l'une des revendications précédentes, **caractérisé en ce que** l'association des stations mobiles (MS2) par rapport aux phases de transmission (U) qui sont utilisées pour la transmission de paquets de données avec la station de base (AP1) a lieu de façon régulière.

28. Procédé selon l'une des revendications précédentes, **caractérisé en ce que** l'écart temporel entre deux signaux de balise (B) successifs est choisi au moins deux fois plus grand que la longueur de la période "contention-free" (sans conflit) (U) située respectivement entre eux.

29. Procédé selon l'une des revendications précédentes 19 à 28, **caractérisé en ce que** la longueur temporelle de la phase d'écoute (M) des stations mobiles (MS2) est au moins 1,5 fois l'écart temporel entre deux signaux de balise (B) successifs.

30. Station de base (AP1, AP2) pour le fonctionnement d'une connexion de données entre une station de base (AP1, AP2) et une ou plusieurs stations mobiles (MS2), dans laquelle la station de base (AP1, AP2) comprend un système de commande de station de base, qui est conçu de telle manière que
- pendant des phases de transmission (U), il échange des paquets de données (DATA) avec les stations mobiles (MS2), et il indique à chaque fois, par émission d'un signal de balise (B), le commencement de chaque phase de transmission (U) et réserve l'interface aérienne pour la phase de transmission respective (U),
- il forme des paquets de données (DATA) avec des données d'un flux de données (D), et
- il transmet les paquets de données (DATA) à la station mobile associée (MS2),
**caractérisée en ce que**
le commencement et la fin de chaque formation de paquets de données sont déclenchés à chaque fois par les signaux de balise (B).

31. Station de base (AP1, AP2) selon la revendication 30, **caractérisée en ce que** le flux de données (B) est un flux de données vocales et/ou vidéo.

32. Station de base selon la revendication 30 ou 31, **caractérisée en ce que** le système de commande de station de base est conçu de telle manière qu'il associe les phases de transmission (U) aux stations mobiles (MS2) de telle manière que chaque station mobile (MS2), après qu'une transmission de paquets de données a eu lieu, reste exclue de la transmission de paquets de données à chaque fois pour au moins une phase de transmission successive (U).

33. Station mobile (MS2) pour le fonctionnement d'une connexion de données avec une station de base (AP1, AP2), dans laquelle la station mobile (MS2) comprend un système de commande de station mobile, qui est conçu de telle manière que
- pendant des phases de transmission (U), il échange des paquets de données (DATA) avec la station de base (AP1, AP2),
- il forme des paquets de données (DATA) avec des données d'un flux de données (D), et
- il transmet les paquets de données (DATA) vers la station de base (AP1, AP2),
**caractérisée en ce que**
le commencement et la fin de chaque formation de paquets de données sont déclenchés à chaque fois par des signaux de balise (B) de la station de base (AP1, AP2).

34. Station mobile (MS2) selon la revendication 33, **caractérisée en ce que** le flux de données (D) est un flux de données vocales et/ou vidéo.

35. Station mobile selon la revendication 33 ou 34, **caractérisée en ce que** le système de commande de station mobile est conçu de telle manière que, après que la transmission de paquets de données a eu lieu, il exclut de la transmission de paquets de données à chaque fois au moins une phase de transmission successive (U).
